# EUROPÄISCHE PATENTSCHRIFT

(11) **EP 0 961 726 B1**
(45) Veröffentlichungstag und Bekanntmachung des Hinweises auf die Patenterteilung: **02.10.2002**
(21) Anmeldenummer: 98913588.4
(22) Anmeldetag: 25.02.1998
(51) Int. Cl.: B62D 61/12

(54) **ACHSLIFT FÜR LUFTGEFEDERTE FAHRZEUGACHSEN**
LIFTING SYSTEM FOR AN AIR-SUSPENDED VEHICLE AXLE
SYSTEME DE RELEVAGE D'AXE DE VEHICULE A SUSPENSION PNEUMATIQUE

(30) Priorität: 28.02.1997 EP 97103303
(43) Veröffentlichungstag der Anmeldung: 08.12.1999
(73) Patentinhaber: BPW Bergische Achsen Kommanditgesellschaft, 51674 Wiehl (DE)
(72) Erfinder: BERGHAUS, Roland, D-51789 Lindlar (DE); KOPPLOW, Hans-Werner, D-51588 Nümbrecht (DE); MICHELS, Burchard, D-53804 Much (DE); MICHELS, Manfred, D-51067 Köln (DE); SCHLIMBACH, Andreas, D-53804 Much (DE); RHEIN, Bernd, D-50737 Köln (DE)
(74) Vertreter: Stenger, Watzke & Ring Patentanwälte
(86) Internationale Anmeldenummer: EP9801063
(87) Internationale Veröffentlichungsnummer: WO98038074

(56) Entgegenhaltungen:
- EP-A- 0 450 942
- US-A- 4 783 096

## Beschreibung

Die Erfindung betrifft einen Achslift für luftgefederte Fahrzeugachsen, deren Achskörper an zwei Längslenkern befestigt ist, deren eines Ende über eine Konsole verschwenkbar am Fahrzeugrahmen angelenkt ist und deren anderes Ende sich über eine Luftfeder an dem Fahrzeugrahmen abstützt, mit mindestens einer gegen die Konsole abgestützten Hebevorrichtung, durch deren Betätigung bei gleichzeitiger Endlüftung der beiden den Achskörper am Fahrzeugrahmen abstützenden Luftfedern der Achskörper anhebbar ist.

Achsliftvorrichtungen der genannten Art sind in verschiedenen Ausführungsformen bekannt. So werden in der Praxis Achslifte verwendet, die ergänzend zu dem den Längslenker am Fahrzeugrahmen abstützenden Luftfederbalg einen zweiten Luftfederbalg aufweisen, der auf der dem Achskörper gegenüberliegenden Seite der Konsole am Fahrzeugrahmen befestigt ist. Mit seiner Abtriebsseite ist dieser zweite Luftfederbalg mit einem verschwenkbar an der Konsole gelagerten Liftarm verbunden, über welchen beim Belüften des zusätzlichen Luftfederbalgs und gleichzeitigem Endlüften des den Achskörper am Fahrzeugrahmen abstützenden Luftfederbalgs der Achskörper angehoben werden kann, wenn das Fahrzeug nicht oder nur teilweise beladen ist. Nachteilig an dieser Achsliftvorrichtung ist, daß bei vielen Fahrzeugtypen vor der Konsole nicht genügend Platz zur Anordnung eines zusätzlichen Luftfederbalges vorhanden ist, zumal bei vielen Fahrzeugen an dieser Stelle ein Aufnahmeraum für Paletten vorgesehen ist, und bei Tankfahrzeugen der Schaltkasten. Bei verschiedenen Fahrzeugtypen mit drei hintereinander angeordneten Achsen ist es wünschenswert, im Leerzustand des Fahrzeuges zwei dieser Achsen anzuheben. Bei der zweiten oder dritten Achse im Aggregat ist der Einbauraum vor der Konsole durch die davorliegende Achse aber stark eingeschränkt.

Ferner sind aus der Praxis Achsliftvorrichtungen bekannt, die in der Mitte unter dem Fahrzeugrahmen angeordnet sind und den anzuhebenden Achskörper ebenfalls mittig ergreifen. Solche Achsliftvorrichtungen sind zwar auch für mit Scheibenbremsen versehene Achskörper geeignet, jedoch steht insbesondere bei verschiedenen Typen von Coil- oder Silofahrzeugen der notwendige Platz zwischen den Fahrzeuglängsträgern zur Anordnung der Achsliftvorrichtung nicht zur Verfügung, da bei diesen Fahrzeugtypen Coilmulden oder Auslaßventile in der Fahrzeugmitte angeordnet sind. Zur Montage der mittigen Achsanhebevorrichtung muß deshalb ein separater, stabiler Querträger im Fahrzeugrahmen vorgesehen werden, was jedoch einen hohen wirtschaftlichen Aufwand sowie zusätzliches Gewicht bedingt.

Eine gattungsgemäße Achsliftvorrichtung ist beispielsweise aus der EP-A2-0 450 942 bekannt. Diese bekannte Achsliftvorrichtung weist einen an der Konsole kippbeweglich gelagerten Kipphebel auf, dessen dem anzuhebenden Achskörper zugewandtes freies Ende an der Unterseite des den anzuhebenden Achskörper tragenden Längslenkers anliegt. Daß diesem Achskörper entgegengesetzte freie Ende des Kipphebels stützt sich auf der Unterseite einer zweiten Luftfeder ab, die vor der Konsole angeordnet ist. Durch das Belüften der zweiten Luftfeder und das gleichzeitige Entlüften der den Achskörper am Fahrzeugrahmen abstützenden Luftfeder wird das an der Unterseite des Längslenkers anliegende freie Ende des Kipphebels durch die zweite Luftfeder aufwärts bewegt und somit der mit dem Längslenker verbundene Achskörper angehoben. Da bei vielen Fahrzeugen vor der Konsole eine Stauraum für Paletten vorgesehen ist und bei Tankfahrzeugen vor der Konsole der Schaltkasten angeordnet ist, ist die Anordnung einer zusätzlichen Luftfeder vor der Konsole nur bei einigen wenigen Fahrzeugtypen möglich.

Eine weitere Achsliftvorrichtung ist aus der EP-A 0 431 673 bekannt. Sie besteht aus einem an der Unterseite der Konsole befestigten, in Richtung des Achskörpers weisenden festen Tragarm, auf dessen freiem Ende der zusätzliche Luftfederbalg angeordnet ist. Die Abtriebsseite dieses zusätzlichen Luftfederbalges ist so gerichtet, daß die bei der Belüftung wirkenden Druckkräfte schräg von unten gegen den Längslenker wirken. Infolge dieser Anordnung des zusätzlichen Luftfederbalges ist zwar ausreichend Platz für Palettenaufnahmeräume oder Schaltkästen vor der Konsole vorhanden, jedoch ist diese bekannte Achsliftvorrichtung nicht für solche Achsaggregate universell anwendbar, die mit Scheibenbremsen versehen sind. Durch den auf dem Tragarm angeordneten Luftfederbalg verbleibt nicht genügend Platz für den Bremszylinder der Scheibenbremse.

Eine weitere Achsliftvorrichtung ist aus der FR-A 2 649 045 bekannt. Zur Erzeugung des Anhebmomentes verwendet diese Achsliftvorrichtung einen Druckzylinder, welcher über ein Stützelement an der dem Achskörper abgewandten Seite der Konsole befestigt ist. Infolge dieser Anordnung steht auch bei dieser bekannten Ausführungsform vor der Konsole nicht genügend Platz zur Verfügung, um dort, wie dies bei vielen Fahrzeugen wünschenswert ist, einen Aufnahmeraum für Paletten oder bei Tankfahrzeugen einen Schaltkasten unterzubringen. Bei der Achsliftvorrichtung nach FR-A 2 649 045 ist die Kolbenstange des Druckzylinders mit einer Langlochführung versehen, in die ein mit dem Längslenker verbundener Zapfen eingreift. Dieser Zapfen befindet sich unter der Schwenkachse des Längslenkers, so daß sich bei Betätigung des Druckzylinders dessen Kolbenstange mit dem Ende der Langlochführung zunächst gegen den Zapfen legt, und bei weiteren Druckaufbau der Längslenker nach oben verschwenkt. Im Fahrbetrieb bei abgesenkter Achse übertragen sich sämtliche Bewegungen des Längslenkers auch auf den Zapfen, so daß dieser eine dauernde Relativbewegung bezüglich der Langlochführung der Kolbenstange ausführt.

Der Erfindung liegt die **Aufgabe** zugrunde, einen Achslift der bekannten Art so weiterzubilden, daß er konstruktiv einfach aufgebaut ist und für möglichst alle Fahrzeugtypen verwendbar ist.

Die **Lösung** dieser Aufgabenstellung ist erfindungsgemäß dadurch gekennzeichnet, daß die Hebevorrichtung als Druckmittelzylinder, vorzugsweise Membranzylinder, mit einer aus dessen Gehäuse herausragenden Kolbenstange als Antriebsteil ausgebildet ist,
daß die Kolbenstange in einer gegenüber dem Gehäuse starr angeordneten Kolbenstangen-Axialführung geführt ist und sich gegen ein Kraftübertragungsglied stützt,
und daß sich bei betätigtem Druckmittelzylinder das Kraftübertragungsglied von unten gegen den jeweiligen Längslenker legt und diesen anhebt.

Für eine so ausgebildete Achsliftvorrichtung ist neben dem Druckmittelzylinder, der sich beispielsweise auf einem zusätzlichen Stützelement an der Konsole befestigen läßt, nur noch ein Kraftübertragungsglied notwendig, welches die von dem Druckmittelzylinder erzeugte Druckkraft von unten gegen den Längslenker weiterleitet. Bestandteil dieses Kraftübertragungsgliedes kann u. a. ein um eine horizontale Drehachse schwenkbarer, vorzugsweise an der Konsole oder einem mit der Konsole starr verbundenen Teil angelenkter Schwenkarm sein. Der Schwenkarm ist vorzugsweise so ausgebildet, daß er sich mit einem daran befestigten, vorzugsweise elastischen Pufferelement von unten gegen den Längslenker legt.

Geeignet für einen solchen Druckmittelzylinder als Hebevorrichtung ist z. B. ein herkömmlicher Bremszylinder.

In einer bevorzugten Ausführungsform erfolgt die Befestigung des Druckmittelzylinders an einem Stützelement, welches sich in unterschiedlichen Winkelstellungen an der Konsole festlegen läßt. Auf diese Weise läßt sich der Achslift mit verschiedenen Luftfederaggregaten kombinieren, wodurch ein besonders universeller Einsatz und insbesondere auch eine Nachrüstung bei bereits vorhandenen Achsaggregaten möglich wird. Zur Einstellung der unterschiedlichen Winkelstellungen kann entweder die Konsole oder das Stützelement mit einer Mehrzahl von Bohrungen für einen Lagerbolzen versehen sein, der sich durch eine dieser Bohrungen hindurchstecken läßt.

Die Realisierung der Kolbenstangen-Axialführung kann beispielsweise dadurch erfolgen, daß nahe dem Austritt der Kolbenstange aus dem Gehäuse eine Gleitbuchse angeordnet ist, die die Kolbenstange gegen ein seitliches Auslenken stützt und damit axial führt.

Gemäß einer Ausführungsform wird vorgeschlagen, daß das freie Ende der Kolbenstange mit einer frei drehbar gelagerten Rolle mit horizontaler Drehachse versehen ist, die von unten gegen eine an dem Schwenkarm angeordnete Abrollfläche anliegt. Vorzugsweise ist diese Abrollfläche als zur Rolle hin konkav gekrümmte Evolvente gestaltet, bei der die Flächennormale des jeweiligen Anlageortes der Rolle mit der Längsachse der Kolbenstange zusammenfällt. Infolge dieser Gestaltung der Abrollfläche werden Querkräfte auf die das Abtriebsteil bildende Kolbenstange weitgehend vermieden, so daß übermäßig große Reibungskräfte im Bereich der Kolbenstangen-Axialführung vermieden werden.

Gemäß einer anderen Ausführungsform des Achsliftes ist Bestandteil des Kraftübertragungsgliedes zusätzlich zu dem Schwenkarm noch ein Pleuel, dessen oberes Ende über eine horizontale Drehachse an dem Schwenkarm angelenkt ist, und dessen unteres Ende mittels einer zu der Kolbenstangen-Axialführung fluchtenden Geradführung geführt und mit einer Stoßfläche versehen ist, an der eine am freien Ende der Kolbenstange angeordnete Stoßfläche anliegt. Die beiden Stoßflächen sind vorzugsweise eben oder ballig geformt, so daß ausschließlich Druck- bzw. Stoßkräfte übertragen werden können, und keine auf die Kolbenstange einwirkenden Querkräfte.

In einer weiteren Ausgestaltung setzt sich die Geradführung aus Langlochführungen beiderseits des Pleuels zusammen, in die eine am unteren Pleuelende angeordnete Querstange mit daran ausgebildeten Endabschnitten hineinragt. Zwecks Vereinfachung der Konstruktion kann die Geradführung des unteren Pleuelendes zugleich die Kolbenstangen-Axialführung sein.

Weitere Merkmale und Vorteile der Erfindung ergeben sich aus der nachfolgenden Beschreibung der zugehörigen Zeichnung, auf der mehrere Ausführungsbeispiele eines Achsliftes dargestellt sind. Darin zeigen:
- Fig. 1a: eine Seitenansicht einer Luftfederachse in einer ersten Ausführungsform eines in Fahrstellung befindlichen Achsliftes;
- Fig. 1b: eine weitere Seitenansicht der Luftfederachse nach Fig. 1a, jedoch in angehobener Stellung;
- Fig. 2a: eine nur teilweise Seitenansicht einer Luftfederachse in einer zweiten Ausführungsform eines in Fahrstellung befindlichen Achsliftes;
- Fig. 2b: eine weitere Seitenansicht der Luftfederachse nach Fig. 2a, jedoch in angehobener Stellung;
- Fig. 3: eine Teilansicht gemäß der in Fig. 2b eingetragenen Blickrichtung III;
- Fig. 4: eine der Fig. 3 entsprechende Teilansicht, jedoch bei einer gegenüber den Figuren 2a, 2b und 3 geänderten Variante;
- Fig. 5: eine wiederum andere Teilansicht entsprechend der Teilansicht nach Fig. 3 in einer wiederum gegenüber der Ausführungsform nach den Figuren 2a, 2b und Fig. 3 abgewandelten Variante und
- Fig. 6: eine wiederum andere Teilansicht entsprechend der Teilansicht nach Fig. 3 in einer wiederum gegenüber der Ausführungsform nach den Figuren 2a, 2b und Fig. 3 abgewandelten Variante.

Allen gezeigten Ausführungsbeispielen gemeinsam ist eine luftgefederte Fahrzeugachse mit einem Achskörper 1, der im Bereich seiner beiden Enden jeweils mittels zweier Schraubenbügel 2 an einem Längslenker 3 befestigt ist. Jeder der beiden Längslenker 3 ist an seinem vorn liegenden Ende mittels eines Lagerbolzens 4 an einer Konsole 5 verschwenkbar gelagert, die ihrerseits mit dem Fahrzeugrahmen verbunden ist.

An seinem hinteren Ende ist jeder Längslenker 3 über eine Luftfeder 6 am Fahrzeugrahmen abgestützt. Außerdem ist zwischen dem Fahrzeugrahmen und jedem Längslenker 3 ein Stoßdämpfer 7 angeordnet. Vom Fahrzeugrahmen ist in einigen der Zeichnungen jeweils ein Längsträger 8 abschnittsweise zu erkennen.

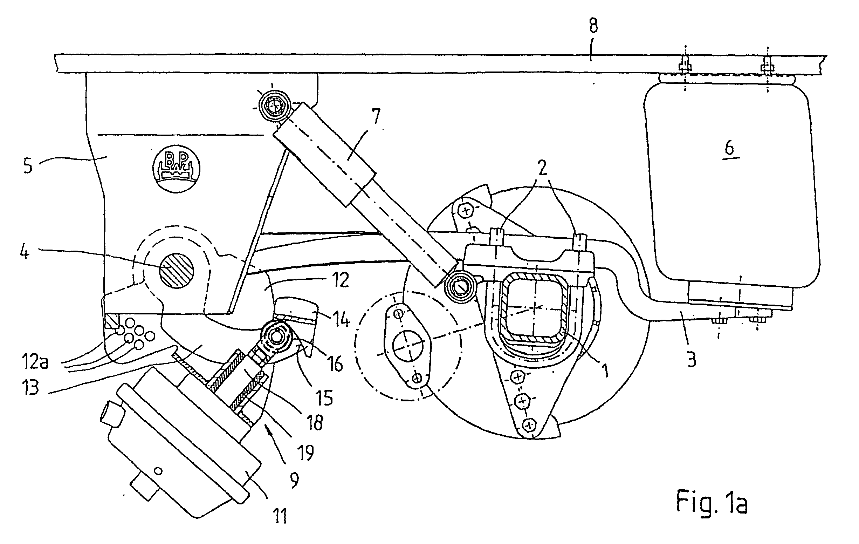

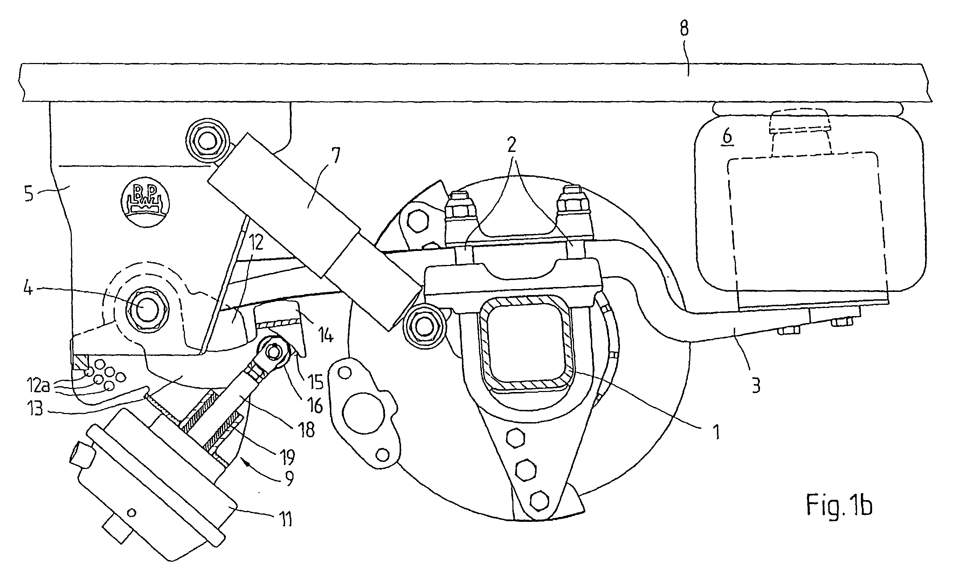

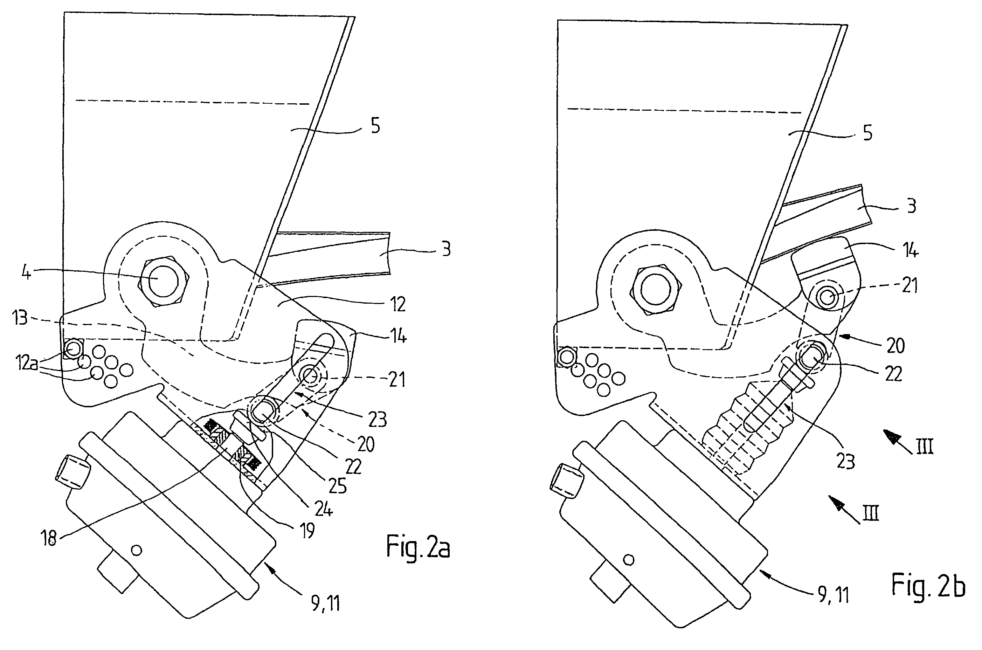

Um die in den Figuren 1a und 2a jeweils in der Fahrstellung dargestellte Luftfederachse in die in den Figuren 1b und 2b dargestellte Stellung anheben zu können, ist eine Hebevorrichtung 9 vorgesehen, die bei den Ausführungsbeispielen gemäß den Figuren 1a bis 2b als Druckmittelzylinder 11 ausgebildet ist.

Allen Ausführungsbeispielen gemeinsam ist ferner, daß zum Festlegen der als Druckmittelzylinder ausgebildeten Hebevorrichtung 9 ein Stützelement 12 verdrehfest an der Konsole 5 angeordnet ist. Allen Ausführungsformen ferner gemeinsam ist ein Schwenkarm 13, welcher an der Konsole 5 oder dem Stützelement 12 angelenkt ist. Bei allen Ausführungsformen ist der Schwenkarm 13 mit einem auf seiner Oberseite befestigten Pufferelement 14 versehen, welches sich von unten gegen die Unterseite des Längslenkers 3 legt.

Bei der in den Figuren 1a und 1b dargestellten ersten Ausführungsform wird die Hebevorrichtung 9 durch einen Druckmittelzylinder 11 gebildet, z. B. einen als Membranzylinder ausgebildeten Bremszylinder. Der Druckmittelzylinder 11 ist so an dem die Konsole 5 nach unten verlängernden Stützelement 12 befestigt, daß die das Abtriebsteil des Druckmittelzylinders 11 bildende Kolbenstange 18 in Richtung auf die Unterseite des Längslenkers 3 weist. Um einen solchermaßen ausgebildeten Achslift mit unterschiedlichen Luftfederungen kombinieren und insbesondere auch nachrüsten zu können, ist das Stützelement 12 in verschiedenen Winkelstellungen an der Konsole 5 festlegbar. Zu diesem Zweck sind in dem Stützelement 12 mehrere Bohrungen 12a ausgebildet, über welche das Stützelement 12 an der Konsole 5 verdrehsicher festlegbar ist. Zum Anheben des Längslenkers 3 über den Druckmittelzylinder 11 ist der drehbeweglich an dem Lagerbolzen 4 mit horizontaler Drehachse befestigte Schwenkarm 13 mit einer Abrollfläche 15 versehen, gegen die von unten eine an dem freien Ende der Kolbenstange 18 frei drehbar gelagerte Rolle 16 anliegt. Die Abrollfläche 15 des als Kraftübertragungsglied dienenden Schwenkarms 13 ist als zur Rolle 16 hin konkav gekrümmte Evolvente gestaltet. Der Verlauf der Evolvente ist hierbei dergestalt, daß die Flächennormale jenes Ortes, an dem die Rolle 16 an der Abrollfläche 15 anliegt, exakt mit der Längsachse der Kolbenstange 18 zusammenfällt. Infolge dieser Evolventengestaltung wird erreicht, daß keine oder allenfalls sehr geringe Querkräfte auf die Rolle 16 und damit auf die Kolbenstange 18 ausgeübt werden.

Gleichwohl ist es erforderlich, die Kolbenstange 18 des Druckmittelzylinders 11 axial zu führen, wozu nahe dem Austritt der Kolbenstange 18 aus dem Gehäuse des Druckmittelzylinders 11 eine als Kolbenstangen-Axialführung dienende Gleitbuchse 19 an dem Gehäuse befestigt ist.

Bei den Ausführungsformen gemäß den Figuren 2a bis 6 ist das zwischen Druckmittelzylinder 11 und Längslenker 3 angeordnete Kraftübertragungsglied mehrteilig ausgebildet und weist neben dem Schwenkarm 13 ein Pleuel 20 auf. Das obere Ende des Pleuels 20 ist über eine horizontale Drehachse 21 an dem Schwenkarm 13 angelenkt. Das untere Pleuelende 22 ist in einer Geradführung 23 geführt, die zu der Kolbenstangen-Axialführung 19 exakt fluchtet. An dem unteren Pleuelende 22 ist ferner eine Stoßfläche 24 ausgebildet, an der eine weitere Stoßfläche 25 des äußeren Endes der Kolbenstange 18 anliegt. Beim Ausführungsbeispiel ist die Stoßfläche 24 ballig, und die Stoßfläche 25 eben gestaltet, wodurch Querkräfte auf die Kolbenstange 18 weitestgehend vermieden werden. Auf die zu der Geradführung 23 fluchtende Kolbenstangen-Axialführung 19 wirken daher keine nennenswerten Querkräfte ein, so daß hier nur geringe Reibwiderstände auftreten.

Die Geradführung 23 setzt sich aus Langlochführungen beidseits der Kolbenstange 18 und des Pleuels 20 zusammen. Diese Langlochführungen befinden sich in dem insoweit zweiteilig ausgebildeten und an der Konsole 5 befestigten Stützelement 12.

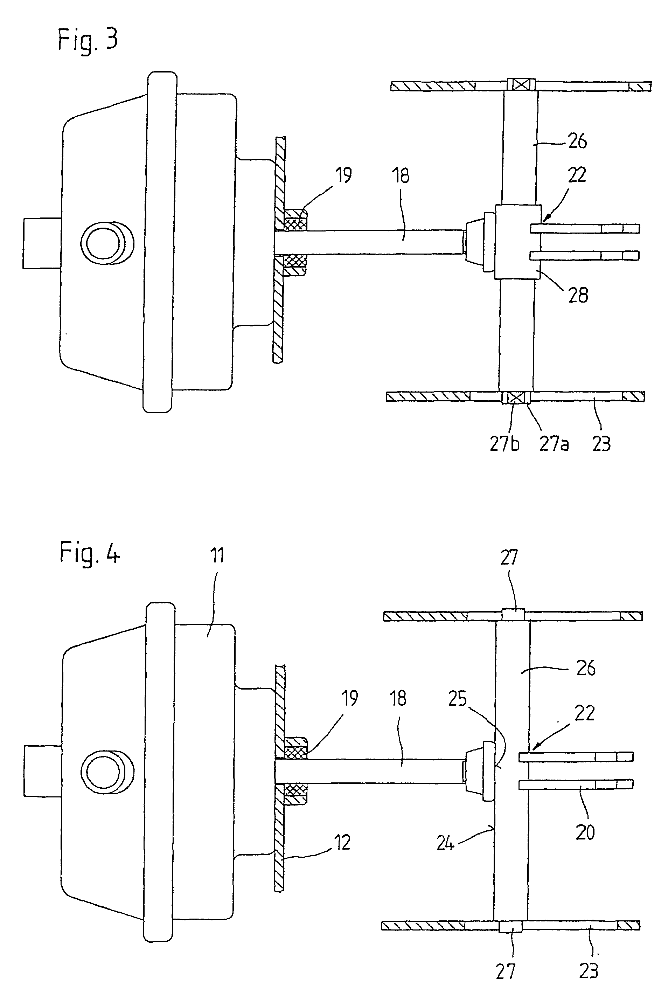

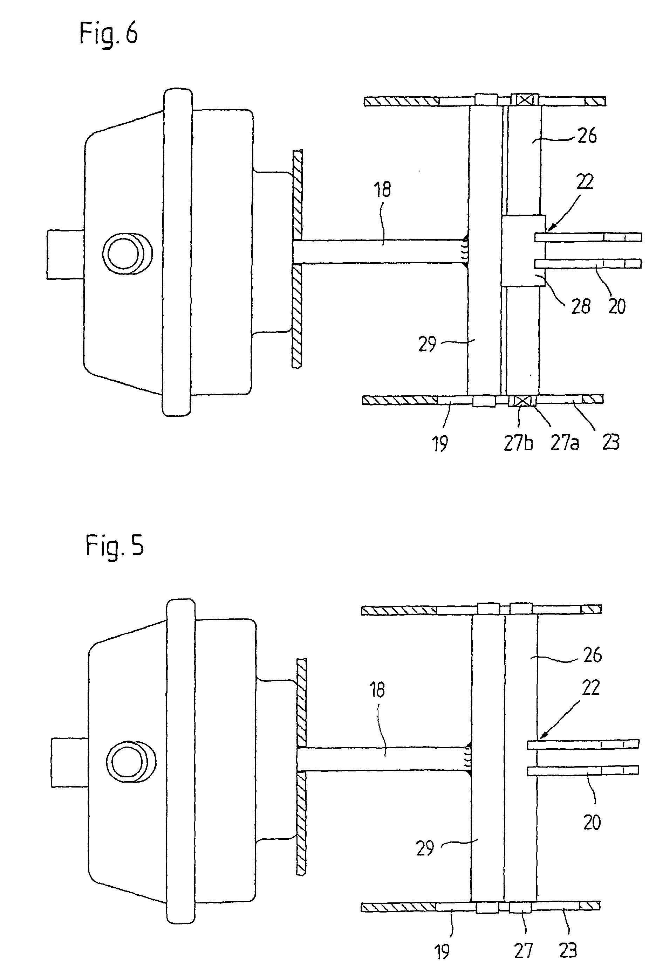

Details dieser Langlochführungen sind in den Figuren 3 und 4 dargestellt. Darin ist zu erkennen, daß an dem unteren Pleuelende 22 eine Querstange 26 mit an beiden Enden daran ausgebildeten Endabschnitten 27, 27a befestigt ist. Die Endabschnitte 27, 27a laufen in den beiden Langlochführungen der Geradführung 23 und führen auf diese Weise das untere Pleuelende 22 exakt in Fluchtung zu der Kolbenstange 18. Um sicherzustellen, daß die Querstange 26 mit dem daran befestigten Pleuel 20 schwenkbar ist, sind bei der in Fig. 4 dargestellten vereinfachten Ausführungsform die Endabschnitte 27 rund gestaltet, mit einem etwas geringeren Durchmesser als die Breite der Langlochführungen.

Demgegenüber ist bei der geringfügig anderen Ausführungsform gemäß Fig. 3 die Querstange 26 mit Endabschnitten 27a versehen, an denen ebene Flächen 27b ausgebildet sind, die sich an den Innenflächen der Langlochführungen abstützen. Hierdurch wird eine flächige Berührung zwischen den beiden Langlochführungen und der Querstange 26 erreicht, so daß hier der Verschleiß geringer ist als bei der Ausführung gemäß Fig. 4. Um allerdings die Verschwenkbarkeit des Pleuels 20 sicherzustellen, ist bei dieser Ausführungsform das untere Pleuelende 22 mit einer Buchse 28 versehen, welche frei drehbar die Querstange 26 umschließt und auf diese Weise eine Relativbewegung zueinander zuläßt.

Eine weitere Modifikation der in den Figuren 2a, 2b und 3 dargestellten Grundbauform ist in Fig. 5 dargestellt. Hierbei ist das freie Ende der Kolbenstange 18 nicht, wie bei der voranstehend beschriebenen Ausführungsform, als Stößel gestaltet, sondern als weitere Querstange 29, die, ebenso wie die Querstange 26 des Pleuels 20, in der aus den Langlochführungen bestehenden Geradführung 23 geführt ist. Bei dieser Ausführungsform bildet daher die Geradführung 23 des unteren Pleuelendes 22 zugleich die Kolbenstangen-Axialführung. Die Querstange 29 bildet das äußere, freie Ende der Kolbenstange 18 und ist zu diesem Zweck mit der Kolbenstange 18 fest verbunden.

Die Variante nach Fig. 6 unterscheidet sich von der Fig. 5 wiederum durch die zusätzliche Verwendung der Buchse 28, welche eine gelenkige Verbindung zwischen der Querstange 26 und dem Pleuel 20 herstellt, wodurch die Endabschnitte 27a der Querstange 26 mit verschleißarmen ebenen Flächen 27b versehen werden können.

Die dargestellten Ausführungsformen eines Achsliftes zeichnen sich durch eine besonders kompakte und platzsparende Bauweise aus, so daß alle Achsliftvorrichtungen auch zum Anheben von mit Scheibenbremsen versehenen Luftfederachsen geeignet sind. Sämtliche Ausführungsbeispiele sind auch zur nachträglichen Anordnung an vorhandenen Luftfederachsen geeignet, da sie ohne Schweißarbeiten montierbar sind.

### Bezugszeichenliste

- 1: Achskörper
- 2: Schraubenbügel
- 3: Längslenker
- 4: Lagerbolzen
- 5: Konsole
- 6: Luftfeder
- 7: Stoßdämpfer
- 8: Längsträger
- 9: Hebevorrichtung
- 11: Druckmittelzylinder
- 12: Stützelement
- 12a: Bohrungen
- 13: Schwenkarm
- 14: Pufferelement
- 15: Abrollfläche
- 16: Rolle
- 18: Kolbenstange
- 19: Kolbenstangen-Axialführung, Gleitbuchse
- 20: Pleuel
- 21: horizontale Drehachse
- 22: unteres Pleuelende
- 23: Geradführung
- 24: Stoßfläche
- 25: Stoßfläche
- 26: Querstange
- 27: Endabschnitt
- 27a: Endabschnitt
- 27b: ebene Fläche
- 28: Buchse
- 29: Querstange

## Patentansprüche

1. Achslift für luftgefederte Fahrzeugachsen, deren Achskörper (1) an zwei Längslenkern (3) befestigt ist, deren eines Ende über eine Konsole (5) verschwenkbar am Fahrzeugrahmen angelenkt ist und deren anderes Ende sich über eine Luftfeder (6) an dem Fahrzeugrahmen abstützt, mit mindestens einer gegen die Konsole (5) abgestützten Hebevorrichtung (9, 11), durch deren Betätigung bei gleichzeitiger Entlüftung der beiden den Achskörper (1) am Fahrzeugrahmen abstützenden Luftfedern (6) der Achskörper (1) anhebbar ist,
**dadurch gekennzeichnet,**
**daß** die Hebevorrichtung als Druckmittelzylinder (11), vorzugsweise Membranzylinder, mit einer aus dessen Gehäuse herausragenden Kolbenstange (18) als Abtriebsteil ausgebildet ist, daß die Kolbenstange (18) in einer gegenüber dem Gehäuse starr angeordneten Kolbenstangen-Axialführung (19, 23) geführt ist und sich gegen ein Kraftübertragungsglied stützt, und daß sich bei betätigtem Druckmittelzylinder (11) das Kraftübertragungsglied von unten gegen den jeweiligen Längslenker (3) legt und diesen anhebt.

2. Achslift nach Anspruch 1, **dadurch gekennzeichnet, daß** Bestandteil des Kraftübertragungsgliedes u. a. ein um eine horizontale Drehachse schwenkbarer, vorzugsweise an der Konsole oder einem mit der Konsole starr verbundenen Teil (12) angelenkter Schwenkarm (13) ist.

3. Achslift nach Anspruch 2, **dadurch gekennzeichnet, daß** sich der Schwenkarm (13) mit einem daran befestigten, vorzugsweise elastischen Pufferelementes (14) von unten gegen den Längslenker (3) legt.

4. Achslift nach einem der vorangehenden Ansprüche, **dadurch gekennzeichnet, daß** der Druckmittelzylinder (11) so an einem als im wesentlichen senkrecht nach unten weisende Verlängerung der Konsole (5) ausgebildeten Stützelement (12) festgelegt ist, daß die Kolbenstange (18) des Druckmittelzylinders (11) in Richtung der Unterseite des Längslenkers (3) ausgerichtet ist.

5. Achslift nach Anspruch 4, **dadurch gekennzeichnet, daß** das Stützelement (12) in unterschiedlichen Winkelstellungen an der Konsole (5) festlegbar ist.

6. Achslift nach Anspruch 5, **dadurch gekennzeichnet, daß** zur unterschiedlichen Festlegung des Stützelementes (12) an der Konsole (5) zumindest eines dieser Bauteile mit einer Mehrzahl von Bohrungen (12a) für einen Lagerbolzen versehen ist.

7. Achslift nach einem der Ansprüche 2 bis 6, **dadurch gekennzeichnet, daß** sich das Abtriebsteil der Hebevorrichtung (9, 11) von unten gegen den Schwenkarm (13) abstützt.

8. Achslift nach Anspruch 7, **dadurch gekennzeichnet, daß** die das Abtriebsteil bildende Kolbenstange (18) mit dem Schwenkarm (13) verbunden ist (Fig. 9).

9. Achslift nach einem der vorangehenden Ansprüche , **gekennzeichnet durch** eine nahe dem Austritt der Kolbenstange (18) aus dem Gehäuse des Druckmittelzylinders (11) angeordnete Gleitbuchse (19) als Kolbenstangen-Axialführung.

10. Achslift nach Anspruch 9, **dadurch gekennzeichnet, daß** das freie Ende der Kolbenstange (18) mit einer frei drehbar gelagerten Rolle (16) mit horizontaler Drehachse versehen ist, die von unten gegen eine an dem Schwenkarm (13) angeordnete Abrollfläche (15) anliegt (Fign. 1a, 1b).

11. Achslift nach Anspruch 10, **dadurch gekennzeichnet, daß** die Abrollfläche (15) als zur Rolle (16) hin konkav gekrümmte Evolvente gestaltet ist, bei der die Flächennormale des jeweiligen Anlageortes der Rolle (16) mit der Längsachse der Kolbenstange (18) zusammenfällt.

12. Achslift nach einem der Ansprüche 2 bis 11, **dadurch gekennzeichnet, daß** Bestandteil des Kraftübertragungsgliedes außerdem ein Pleuel (20) ist, dessen oberes Ende über eine horizontale Drehachse an dem Schwenkarm (13) angelenkt ist, und dessen unteres Ende mittels einer zu der Kolbenstangen-Axialführung (19) fluchtenden Geradführung (23) geführt und mit einer Stoßfläche (24) versehen ist, an der eine am freien Ende der Kolbenstange (18) angeordnete Stoßfläche (25) anliegt.

13. Achslift nach Anspruch 12, **dadurch gekennzeichnet, daß** die beiden Stoßflächen (24, 25) eben oder ballig geformt sind.

14. Achslift nach Anspruch 12 oder Anspruch 13, **dadurch gekennzeichnet, daß** sich die Geradführung (23) aus Langlochführungen beiderseits des Pleuels (20) zusammensetzt, in die eine am unteren Pleuelende (22) angeordnete Querstange (26) mit daran ausgebildeten Endabschnitten (27, 27a) hineinragt.

15. Achslift nach Anspruch 14, **dadurch gekennzeichnet, daß** die Querstange (26) um ihre eigene Längsachse frei drehbar am unteren Pleuelende (22) angeordnet ist, und daß die in die Langlochführungen ragenden Endabschnitte (27a) der Querstange (26) mit ebenen Flächen (27b) versehen sind, welche sich an den Innenflächen der Langlochführungen abstützen.

16. Achslift nach einem der Ansprüche 12 bis 15, **dadurch gekennzeichnet, daß** die Geradführung (23) des unteren Pleuelendes (22) zugleich die Kolbenstangen-Axialführung (19) ist (Fign. 5 und 6).

## Claims

1. Axle lift for air-sprung vehicle axles, the axle body (1) of which is secured on two longitudinal links (3), one end of which is connected pivotably to the vehicle frame by means of a bracket (5) and the other end of which is supported on the vehicle frame via a pneumatic spring (6), with at least one lifting apparatus (9, 11), which is supported against the bracket (5) and by means of the actuation of which the axle body (1) can be raised if air is simultaneously released from the two pneumatic springs (6) supporting the axle body (1) on the vehicle frame, **characterized in that** the lifting apparatus is designed as a pressure-medium cylinder (11), preferably as a diaphragm cylinder, with a piston rod (18) projecting from its housing as an output part, **in that** the piston rod (18) is guided in an axial piston-rod guide (19, 23) arranged in a rigid manner relative to the housing and is supported against a force-transmission member, and **in that**, when the pressure-medium cylinder (11) is actuated, the force-transmission member comes to rest against the respective longitudinal link (3) from below and raises it.

2. Axle lift according to Claim 1, **characterized in that** a swivel arm (13), which is pivotable about a horizontal axis of rotation and is preferably connected pivotally to the bracket or a part (12) connected rigidly to the bracket, is one of the component parts of the force transmission member.

3. Axle lift according to Claim 2, **characterized in that** the swivel arm (13) comes to rest against the longitudinal link (3) from below by means of a buffer element (14), which is secured on the said swivel arm and is preferably flexible.

4. Axle lift according to one of the preceding claims, **characterized in that** the pressure-medium cylinder (11) is fixed in such a way on a supporting element (12) designed as an essentially vertically downward-pointing extension of the bracket (5), **in that** the piston rod (18) of the pressure-medium cylinder (11) is aligned in the direction of the underside of the longitudinal link (3).

5. Axle lift according to Claim 4, **characterized in that** the supporting element (12) can be fixed in different angular positions on the bracket (5).

6. Axle lift according to Claim 5, **characterized in that** at least one of these components is provided with a plurality of holes (12a) for a bearing pin to allow the supporting element (12) to be fixed in different positions on the bracket (5).

7. Axle lift according to one of Claims 2 to 6, **characterized in that** the output part of the lifting apparatus (9, 11) is supported from below against the swivel arm (13).

8. Axle lift according to Claim 7, **characterized in that** the piston rod (18) forming the output part is connected to the swivel arm (13) (Fig. 9).

9. Axle lift according to one of the preceding claims, **characterized by** a slide bush (19) arranged close to the exit of the piston rod (18) from the housing of the pressure-medium cylinder (11) as an axial piston-rod guide.

10. Axle lift according to Claim 9, **characterized in that** the free end of the piston rod (18) is provided with a roller (16), which is mounted in a freely rotatable manner, has a horizontal axis of rotation and rests from below against a rolling surface (15) arranged on the swivel arm (13) (Figures 1a, 1b).

11. Axle lift according to Claim 10, **characterized in that** the rolling surface (15) is configured as an involute, which is curved concavely towards the roller (16) and on which the normal to the surface at the respective contact location of the roller (16) coincides with the longitudinal axis of the piston rod (18).

12. Axle lift according to one of Claims 2 to 11, **characterized in that** another component part of the force transmission member is a connecting rod (20), the upper end of which is connected pivotally to the swivel arm (13) by means of a horizontal pivot, and the lower end of which is guided by means of a straight-line guide (23) in alignment with the axial piston-rod guide (19) and is provided with an abutment surface (24), on which an abutment surface (25) arranged on the free end of the piston rod (18) rests.

13. Axle lift according to Claim 12, **characterized in that** the two abutment surfaces (24, 25) are flat or spherically shaped.

14. Axle lift according to Claim 12 or Claim 13, **characterized in that** the straight-line guide (23) is composed of slotted guides on both sides of the connecting rod (20), into which guides a crossbar (26) arranged at the lower end (22) of the connecting rod projects with end sections (27, 27a) formed on it.

15. Axle lift according to Claim 14, **characterized in that** the crossbar (26) is arranged on the lower end (22) of the connecting rod in such a way that it can rotate freely about its own longitudinal axis, and **in that** the end sections (27a) of the crossbar (26), which project into the slotted guides, are provided with flat surfaces (27b), which are supported on the inner surfaces of the slotted guides.

16. Axle lift according to one of Claims 12 to 15, **characterized in that** the straight-line guide (23) of the lower end (22) of the connecting rod is at the same time the axial piston-rod guide (19) (Figures 5 and 6).

## Revendications

1. Dispositif de levage d'essieu pour des essieux à coussin d'air de véhicules dont le corps d'essieu (1) est fixé à deux bras oscillants longitudinaux (3) dont l'une des extrémités est articulée de manière basculante sur le châssis du véhicule par l'intermédiaire d'une console (5) et dont l'autre extrémité prend appui sur le châssis du véhicule par l'intermédiaire d'un coussin d'air (6), comprenant au moins un dispositif de levage (9, 11) qui prend appui sur la console (5) et dont l'actionnement permet de lever le corps d'essieu (1) tout en purgeant l'air des deux coussins d'air (6) servant d'appui au corps d'essieu (1) par rapport au châssis du véhicule, **caractérisé en ce que** le dispositif de levage est conçu sous la forme d'un cylindre à agent de pression (11), de préférence sous la forme d'un vase à diaphragme, avec une tige de piston (18) sortant du carter de celui-ci et tenant lieu de pièce de sortie de puissance, **en ce que** la tige de piston (18) est guidée dans un guide axial de tige de piston (19, 23) monté rigide par rapport au carter, et **en ce que**, lorsque le cylindre à agent de pression (11) est actionné, l'organe de transmission de force se positionne contre le bras oscillant longitudinal correspondant (3) par-dessous celui-ci et le soulève.

2. Dispositif de levage d'essieu selon la revendication 1, **caractérisé en ce que** l'élément constitutif de l'organe de transmission de force est notamment un bras pivotant (13) apte à pivoter autour d'un axe de rotation horizontal et articulé sur la console ou sur une pièce (12) reliée de manière rigide à la console.

3. Dispositif de levage d'essieu selon la revendication 2, **caractérisé en ce que** le bras pivotant (13) se positionne contre le bras oscillant longitudinal (3) par-dessous celui-ci par l'intermédiaire d'un élément tampon (14), de préférence élastique, fixé à ce dernier.

4. Dispositif de levage d'essieu selon une des revendications précédentes, **caractérisé en ce que** le cylindre à agent de pression (11) est fixé à un élément d'appui (12) conçu sous la forme d'un prolongement de la console (5) orienté sensiblement verticalement vers le bas, de façon que la tige de piston (18) du cylindre à agent de pression (11) soit orientée en direction du dessous du bras oscillant longitudinal (3).

5. Dispositif de levage d'essieu selon la revendication 4, **caractérisé en ce que** l'élément d'appui (12) peut être fixé sur la console (5) dans diverses positions angulaires.

6. Dispositif de levage d'essieu selon la revendication 5, **caractérisé en ce que**, pour fixer l'élément d'appui (12) dans diverses positions sur la console (5), au moins l'un de ces éléments structurels est pourvu d'une pluralité de trous (12a) pour un tourillon.

7. Dispositif de levage d'essieu selon une des revendications 2 à 6, **caractérisé en ce que** la pièce de sortie de puissance du dispositif de levage (9, 11) prend appui sur le bras pivotant (13) par-dessous celui-ci.

8. Dispositif de levage d'essieu selon la revendication 7, **caractérisé en ce que** la tige de piston (18) formant la pièce de sortie de puissance est reliée au bras pivotant (13) (figure 9).

9. Dispositif de levage d'essieu selon une des revendications précédentes, **caractérisé par** une douille coulissante (19) qui fait fonction de guide axial de tige de piston et qui est disposée près de la sortie de la tige de piston (18) hors du carter du cylindre à agent de pression (11).

10. Dispositif de levage d'essieu selon la revendication 9, **caractérisé en ce que** l'extrémité libre de la tige de piston (18) est munie d'un galet monté en libre rotation (16) à axe de rotation horizontal, lequel est appliqué par-dessous contre une surface de roulement (15) ménagée sur le bras pivotant (13) (figures 1a, 1b).

11. Dispositif de levage d'essieu selon la revendication 10, **caractérisé en ce que** la surface de roulement (15) est configurée sous la forme d'une développante (16) à courbure concave vers le galet, de façon que la normale à la surface de chaque point de contact du galet (16) coïncide avec l'axe longitudinal de la tige de piston (18).

12. Dispositif de levage d'essieu selon une des revendications 2 à 11, **caractérisé en ce que** l'élément constitutif de l'organe de transmission de force est également une bielle (20) dont l'extrémité supérieure est articulée avec le bras pivotant (13) par l'intermédiaire d'un axe de rotation horizontal et dont l'extrémité inférieure est guidée au moyen d'un guide rectiligne (23) aligné avec le guide axial de tige de piston (19) et est munie d'une surface de contact (24) contre laquelle est appliquée une surface de contact (25) située à l'extrémité libre de la tige de piston (18).

13. Dispositif de levage d'essieu selon la revendication 12, **caractérisé en ce que** les deux surfaces de contact (24, 25) sont de forme plane ou bombée.

14. Dispositif de levage d'essieu selon la revendication 12 ou la revendication 13, **caractérisé en ce que** le guide rectiligne (23) est constitué de guides à trous oblongs qui sont situés de part et d'autre de la bielle (20) et dans lesquels une traverse (26) disposée à l'extrémité inférieure (22) de la bielle pénètre par l'intermédiaire de portions d'extrémité (27, 27a) ménagées sur celle-ci.

15. Dispositif de levage d'essieu selon la revendication 14, **caractérisé en ce que** la traverse (26) est montée en libre rotation autour de son propre axe longitudinal à l'extrémité inférieure (22) de la bielle, et **en ce que** les portions d'extrémité (27a) de la traverse (26) pénétrant dans les guides à trous oblongs sont pourvues de surfaces planes (27b) qui prennent appui contre les surfaces intérieures des guides à trous oblongs.

16. Dispositif de levage d'essieu selon une des revendications 12 à 15, **caractérisé en ce que** le guide rectiligne (23) de l'extrémité inférieure (22) de la bielle est en même temps le guide axial de tige de piston (19) (figures 5 et 6).
